# EUROPÄISCHE PATENTSCHRIFT

(11) **EP 4 424 958 B1**
(45) Veröffentlichungstag und Bekanntmachung des Hinweises auf die Patenterteilung: **18.03.2026**
(21) Anmeldenummer: 24152233.3
(22) Anmeldetag: 16.01.2024
(51) Int. Cl.: E05B 81/66, E05B 81/72, E05C 3/04, E05B 1/00

(54) **KABINE FÜR EINE LANDWIRTSCHAFTLICHE ARBEITSMASCHINE**
CABIN FOR AN AGRICULTURAL MACHINE
CABINE POUR MACHINE DE TRAVAIL AGRICOLE

(30) Priorität: 03.03.2023 DE 102023105274
(43) Veröffentlichungstag der Anmeldung: 04.09.2024
(73) Patentinhaber: CLAAS Tractor SAS, 78141 Vélizy-Villacoublay Cedex (FR)
(72) Erfinder: Cossin, Aurélien, 92140 Clamart (FR); Gicquel, Guénolè, 78690 Les Essarts-le-Roi (FR); Bechade, Frédéric, 78140 Vélizy Villacoublay (FR); Villette, Clement, 58310 Bouhy (FR); Landrou, Jeróme, 28210 Senantes (FR)
(74) Vertreter: CLAAS Gruppe

(56) Entgegenhaltungen:
- WO-A1-2015/198999
- WO-A1-2015/199182
- FR-A1- 2 720 991
- US-B2- 9 815 434

## Beschreibung

Die vorliegende Erfindung betrifft eine Kabine für eine landwirtschaftliche Arbeitsmaschine, insbesondere einen Traktor, gemäß dem Oberbegriff des unabhängigen Patentanspruchs 1 sowie eine landwirtschaftliche Arbeitsmaschine, insbesondere einen Traktor, mit einer solchen Kabine gemäß dem Oberbegriff des unabhängigen Patentanspruchs 11.

Landwirtschaftliche Arbeitsmaschinen, beispielsweise Traktoren, Feldhäcksler oder Mähdrescher, weisen üblicherweise eine Kabine für den Bediener der Arbeitsmaschine auf. Die Kabine weist dabei eine oder mehrere Kabinenscheiben auf, die dem Bediener eine Sicht nach draußen ermöglichen und ihn vor Umgebungseinflüssen, beispielsweise Regen oder Schmutz schützen. Um die Übersichtlichkeit und somit auch die Sicherheit bei der Bedienung der landwirtschaftlichen Arbeitsmaschine zu erhöhen, sollen die Kabinen dem Bediener eine möglichst störungsfreie Sicht aus Kabine ermöglichen. Um eine möglichst störungsfreie Sicht aus der Kabine zu ermöglichen, weisen heutige Kabinen daher oft eine großzügige Verglasung mit großflächigen Kabinenscheiben auf.

Damit die Kabine während des Betriebs von Verunreinigungen befreit werden kann, weisen zumindest einige Scheiben der Kabine, insbesondere die Front- und Heckscheibe, einen Scheibenwischer auf, der zum Entfernen der Verunreinigungen manuell oder automatisch zugeschaltet werden kann. Ein solcher Scheibenwischer ist beispielsweise aus der DE 10 2012 107 231 A1 bekannt. Ein Handgriff zum Betätigen, also Verschwenken, und Arretieren einer Heckscheibe eines Traktors ist aus der WO 2015/198999 A1 oder der WO 2015/199182 A1 bekannt.

Bei der Nutzung von Heckscheibenwischern können sich anders als bei Scheibenwischern, die zur Reinigung der Frontscheibe verwendet werden, aufgrund der Position des Scheibenwischers und der Ausgestaltung der Heckscheibe Herausforderungen im Betrieb ergeben. So wird der Scheibenwischer einer Heckscheibe einer Kabine üblicherweise in einem oberen Bereich der Heckscheibe montiert, wobei der für den Antrieb des Scheibenwischers erforderliche Motor entsprechend nahe oder an einer Dachstruktur der Kabine montiert wird. Weiterhin zeichnen sich Heckscheiben einer Kabine einer landwirtschaftlichen Arbeitsmaschine dadurch aus, dass diese aus ihrer Schließstellung in eine oder mehrere Öffnungsstellungen verschwenkt werden können, um beispielsweise verschieden dimensionierte hydraulische und/oder elektrische Kabel ins Kabineninnere zu führen und/oder eine bessere Sicht auf den Heckbereich der Arbeitsmaschine und ein ggfs. an die Arbeitsmaschine angeschlossenes Anbaugerät zu gewährleisten. Die Positionierung des Scheibenwischers in Kombination mit der Schwenkbarkeit der Heckscheibe kann im Betrieb des Scheibenwischers unter Umständen, insbesondere dann, wenn die Heckscheibe weit aufgeschwenkt ist, dazu führen, dass sich das Wischerblatt aus der vorgesehen Ausrichtung bewegt, insbesondere verdreht, was wiederum zu erheblichen Beschädigungen der Heckscheibe, der Rahmenstruktur der Kabine und/oder der mechanischen Komponenten des Scheibenwischers führen kann.

Ausgehend hiervon ist es demnach die Aufgabe der vorliegenden Erfindung die beschriebenen Nachteile des Standes der Technik auszuräumen und insbesondere eine Kabine anzugeben, bei der Beschädigungen der Heckscheibe, der Rahmenstruktur der Kabine und/oder der mechanischen Komponenten Scheibenwischers aufgrund einer solcher Fehlausrichtung des Scheibenwischers vermieden werden können.

Diese Aufgabe wird erfindungsgemäß durch die Merkmale des unabhängigen Patentanspruchs 1 gelöst, wobei vorteilhafte Weiterbildungen der erfindungsgemäßen Kabine Gegenstand der entsprechenden abhängigen Patentansprüche 2 bis 10 sind.

Demnach betrifft die vorliegende Erfindung eine Kabine für eine landwirtschaftliche Arbeitsmaschine, insbesondere einen Traktor. Die Kabine umfasst eine Rahmenstruktur, an der eine Heckscheibe schwenkbar gelagert ist, wobei die Heckscheibe zwischen einer Schließstellung, einer ersten Offenstellung und einer zweiten Offenstellung verschwenkbar und in diesen jeweils arretierbar ist. Zur Betätigung und Arretierung der Heckscheibe ist ein Handgriff vorgesehen, der ein an der Heckscheibe befestigtes Betätigungselement und ein an der Rahmenstruktur befestigtes Halteelement umfasst. Die Kabine umfasst ferner einen Scheibenwischer zur Reinigung der Heckscheibe. Die Kabine ist dadurch gekennzeichnet, dass der Handgriff eine Sensoreinrichtung umfasst, wobei die Sensoreinrichtung in der Schließstellung und der ersten Offenstellung der Heckscheibe mit dem Betätigungselement zusammenwirkt und ein Betrieb des Scheibenwischers nur dann freigegeben ist.

Eine Schließstellung der Heckscheibe ist dabei so definiert, dass die Heckscheibe nicht verschwenkt ist, die Heckscheibe also die durch die Rahmenstruktur gebildete heckseitige Öffnung in der Kabine verschließt. Die erste Offenstellung der Heckscheibe ist so definiert, dass die Heckscheibe nur leicht verschwenkt, also leicht geöffnet ist, sodass Kabel verschiedener Dimensionierung von außen in das Kabineninnere durch die gebildete Öffnung geführt werden können. Die zweite Offenstellung ist so definiert, dass die Heckscheibe erheblich verschwenkt ist, also deutlich stärker verschenkt ist als in der ersten Offenstellung. Die Heckscheibe befindet sich in dieser zweiten Offenstellung vorzugsweise nicht oder nur noch vernachlässigbar im Sichtfeld des Bedieners, die Heckscheibe ist besonders bevorzugt im Wesentlichen parallel zu einer das Kabinendach bildenden Dachstruktur der Rahmenstruktur ausgerichtet bzw. verschwenkt.

Die erfindungsgemäße Ausgestaltung erlaubt es auf besonders unkomplizierte Art und Weise zu detektieren, ob sich die Heckscheibe in der Schließstellung, der ersten Offenstellung oder der zweiten Offenstellung befindet und abhängig von der detektierten bzw. sensierten Stellung der Heckscheibe den Betrieb des Scheibenwischers zur Reinigung der Heckscheibe freizugeben oder zu sperren. Der Handgriff zum Betätigen, also Verschenken, und Arretieren der Heckscheibe kann somit durch das Ergänzen einer Sensoreinrichtung, die kostengünstig und einfach am Handgriff zu montieren ist, dazu genutzt werden, die Position bzw. Stellung der Heckscheibe relativ zu Rahmenstruktur der Kabine über ein Zusammenwirken von Sensoreinrichtung und Betätigungselements des Handgriffs oder einem fehlenden Zusammenwirken zu ermitteln. Das Sperren des Scheibenwischers, wenn die Heckscheibe weit ver- bzw. aufgeschwenkt ist, also in der zweiten Offenstellung, verhindert, dass der Scheibenwischer aufgrund einer schwenkwinkelbedingten Fehlausrichtung während des Betriebs Beschädigungen an der Heckscheibe, der Kabine und/oder den Komponenten des Scheibenwischers selbst verursacht.

Gemäß einer vorteilhaften Weiterbildung der Erfindung ist vorgesehen, dass das Betätigungselement einen ersten Vorsprung und einen zweiten Vorsprung umfasst, die voneinander beabstandet angeordnet sind und zum Arretieren der Heckscheibe in der Schließstellung und der ersten Offenstellung dienen.

Voneinander beabstandet bedeutet in diesem Zusammenhang, dass die Vorsprünge ausgehend von der Heckscheibe, an welcher das Betätigungselement montiert bzw. befestigt ist, in orthogonaler Richtung voneinander beabstandet sind, also hintereinander angeordnet sind. Mit anderen Worten, der erste Vorsprung ist näher an der Heckscheibe positioniert bzw. angeordnet als der zweite Vorsprung.

Vorzugsweise ist vorgesehen, dass das Halteelement eine Aufnahme umfasst, in welcher der erste Vorsprung zum Arretieren der Heckscheibe in der Schließstellung der Heckscheibe und der zweite Vorsprung zum Arretieren der Heckscheibe in der ersten Offenstellung der Heckscheibe aufgenommen ist.

Diese Ausgestaltung des Handgriffs, respektive des Betätigungselements und des Halteelements des Handgriffs, erlaubt ein besonders einfaches Arretieren der Heckscheibe in der Schließstellung und der ersten Offenstellung. Durch ein Betätigen, insbesondere Rotieren bzw. Verdrehen, des Handgriffs können die Vorsprünge am Betätigungselements wahlweise in oder aus der Aufnahme des Halteelements bewegt werden, wodurch es möglich wird die Heckscheibe in die verschiedenen Stellungen zu verschwenken und dort zu arretieren bzw. zu sichern.

Gemäß einer vorteilhaften Weiterbildung der Erfindung ist vorgesehen, dass das Halteelement des Handgriffs die Sensoreinrichtung umfasst.

Vorzugsweise ist vorgesehen, dass die Sensoreinrichtung Bereich der Aufnahme des Haltelements angeordnet ist.

Gemäß einer vorteilhaften Weiterbildung der Erfindung ist vorgesehen, dass der erste Vorsprung der Betätigungseinrichtung in der Schließstellung der Heckscheibe mit der Sensoreinrichtung zusammenwirkt und der zweite Vorsprung der Betätigungseinrichtung in der ersten Offenstellung der Heckscheibe mit der Sensoreinrichtung zusammenwirkt.

Die Positionierung der Sensoreinrichtung am Halteelement, insbesondere derart, dass der Detektionsbereich bzw. Taster der Sensoreinrichtung in der Aufnahme des Halteelements liegt, sorgt dafür, dass mittels der Vorsprünge, die sich bei Arretierung der Heckscheibe in der Schließstellung oder der ersten Offenstellung in der Aufnahme des Halteelements befinden, diese Stellungen der Heckscheibe auf unkomplizierte Art und Weise sensiert bzw. detektiert werden können und basierend hierauf der Scheibenwischer angesteuert, also freigegeben, werden kann.

Gemäß einer vorteilhaften Weiterbildung der Erfindung ist vorgesehen, dass das Betätigungselement ein Lagerelement und ein mit einem Griffteil versehenes Griffelement umfasst, wobei das Lagerelement an der Heckscheibe befestigt und das Griffelement auf dem Lagerelement drehbeweglich angeordnet ist.

Diese Ausgestaltung erlaubt eine besonders einfache Montage des Betätigungselements an der Heckscheibe und stellt gleichzeitig sicher, dass das Betätigungselements zum Verschwenken und Arretieren der Heckscheibe durch einen Bediener in der Kabine ohne großen Kraftaufwand bewegt werden kann.

Vorzugsweise ist vorgesehen, dass der erste Vorsprung und der zweite Vorsprung an dem Griffelement des Betätigungselements ausgebildet sind.

Die Positionierung der Vorsprünge am Griffelement stellt sicher, dass diese bei einer Betätigung des Griffelements durch den Bediener über das Griffteil mitbewegt bzw. mitrotiert werden, wodurch die Arretierung der Heckscheibe in der Schließstellung oder der ersten Offenstellung gelöst werden oder erfolgen kann und ein reversibles Verschwenken der Heckscheibe zwischen den verschiedenen Stellungen erlaubt wird.

Gemäß einer vorteilhaften Weiterbildung der Erfindung ist vorgesehen, dass das Griffelement zwei unterschiedliche Oberflächenstrukturen aufweist.

Gemäß einer vorteilhaften Weiterbildung der Erfindung ist vorgesehen, dass das Griffelement aus zwei unterschiedlichen Materialien ausgebildet ist.

Gemäß einer vorteilhaften Weiterbildung der Erfindung ist vorgesehen, dass das Griffelement zwei voneinander verschiedene Farbbeschichtungen umfasst.

Gemäß einer vorteilhaften Weiterbildung der Erfindung ist vorgesehen, dass die Sensoreinrichtung eine berührend arbeitende Sensoreinrichtung, insbesondere ein Schalter, ist, die in der Schließstellung und der ersten Offenstellung der Heckscheibe das Betätigungselement des Handgriffs, insbesondere den ersten Vorsprung oder den zweiten Vorsprung, kontaktiert.

Alternativ hierzu ist vorgesehen, dass die Sensoreinrichtung eine berührungslos arbeitende Sensoreinrichtung, insbesondere ein kapazitiver, induktiver oder optischer Sensor, ist, wobei sich das Betätigungselement, insbesondere der erste Vorsprung oder der zweite Vorsprung, in der Schließstellung und der ersten Offenstellung der Heckscheibe im Detektionsbereich der Sensoreinrichtung befindet.

Die Möglichkeit verschiedene Sensoreinrichtungen zum Sensieren bzw. Detektieren der verschiedenen Stellungen der Heckscheibe zu nutzen schafft die Freiheit die Stellung der Heckscheibe anhand des Handgriffs zu detektieren, ohne dass der Handgriff eine spezielle strukturelle Ausgestaltung aufweisen muss. So muss nicht zwangsläufig eine Berührung von Betätigungselements und Sensoreinrichtung in der Schließstellung und der ersten Offenstellung der Heckscheibe stattfinden. Vielmehr ist es genauso gut möglich, dass das Betätigungselements lediglich im Detektionsbereich der Sensoreinrichtung positioniert ist.

Insbesondere die Möglichkeit, das Betätigungselement bzw. das Griffelement mit verschiedenen Merkmalen auszustatten, schafft in Kombination mit einer berührungslos arbeitenden Sensoreinrichtung ein erhebliches Maß an Freiheit die Stellung der Heckscheibe zu sensieren bzw. zu detektieren.

Gemäß einer vorteilhaften Weiterbildung der Erfindung ist vorgesehen, dass die Sensoreinrichtung mit einer Steuereinrichtung zur Übertragung von Daten verbunden ist, wobei der Betrieb des Scheibenwischers bei einem Zusammenwirken von Sensoreinrichtung und Betätigungselement mittels der Steuereinrichtung freigegeben ist. Die Steuereinrichtung kann Teil der Kabine, Teil der Arbeitsmaschine oder aber als eine maschinenferne Steuereinrichtung ausgebildet sein.

Die Verwendung einer Steuereinrichtung, die mit der Sensoreinrichtung zur Übertragung von Daten kommuniziert erlaubt es die Sensorsignale der Sensoreinrichtung zu verarbeiten und aus diesen zu bestimmen, ob sich die Heckscheibe in der Schließstellung oder der ersten Offenstellung befindet oder aber ob die Heckscheibe die zweite Offenstellung eingenommen hat. Ermittelt die Steuereinrichtung, dass sich die Heckscheibe in der Schließstellung oder der ersten Offenstellung befindet, da beispielsweise von der Sensoreinrichtung ein oder ein bestimmtes Sensorsignal generiert wird, das Betätigungselement, insbesondere der erste Vorsprung oder zweite Vorsprung, somit mit der Sensoreinrichtung zusammenwirkt, gibt die Steuereinrichtung den Betrieb des Scheibenwischers frei. Ermittelt die Steuereinrichtung hingegen, dass sich die Heckscheibe in der zweiten Offenstellung befindet, da beispielsweise von der Sensoreinrichtung kein oder ein anderes bestimmtes Sensorsignal generiert wird, das Betätigungselement, insbesondere erste Vorsprung oder der zweite Vorsprung, somit nicht mit der Sensoreinrichtung zusammenwirkt, sperrt die Steuereinrichtung den Betrieb des Scheibenwischers. Hierdurch wird sichergestellt, dass der Scheibenwischer nur bei geschlossener oder gering verschwenkter Heckscheibe aktiviert werden kann, sei es manuell oder automatisch. Bei zu weit verschwenkter Heckscheibe kann der Scheibenwischer hingegen nicht aktiviert werden, um etwaige Beschädigungen zu vermeiden.

Die erfindungsgemäße Aufgabe wird ferner durch eine landwirtschaftliche Arbeitsmaschine, insbesondere einen Traktor, mit einer Kabine gemäß dem unabhängigen Patentanspruch 11 gelöst.

Die vorliegende Erfindung wird nachstehend anhand der in den Figuren abgebildeten Ausführungsformen näher beschrieben.

Es zeigen:
- FIG. 1: eine schematische und exemplarische Darstellung einer erfindungsgemäßen landwirtschaftlichen Arbeitsmaschine in Gestalt eines Traktors;
- FIG. 2A: eine schematische und exemplarische Darstellung einer Heckscheibe einer erfindungsgemäßen Kabine der landwirtschaftlichen Arbeitsmaschine aus FIG. 1 in einer Schließstellung;
- FIG. 2B: eine schematische und exemplarische Darstellung der Heckscheibe der erfindungsgemäßen Kabine der landwirtschaftlichen Arbeitsmaschine aus FIG. 1 in einer ersten Offenstellung; und
- FIG. 2C: eine schematische und exemplarische Darstellung der Heckscheibe der erfindungsgemäßen Kabine der landwirtschaftlichen Arbeitsmaschine aus FIG. 1 in einer zweiten Offenstellung.

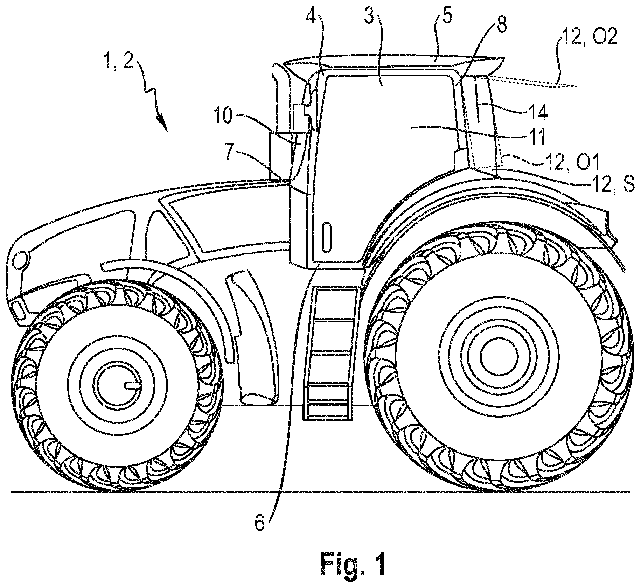

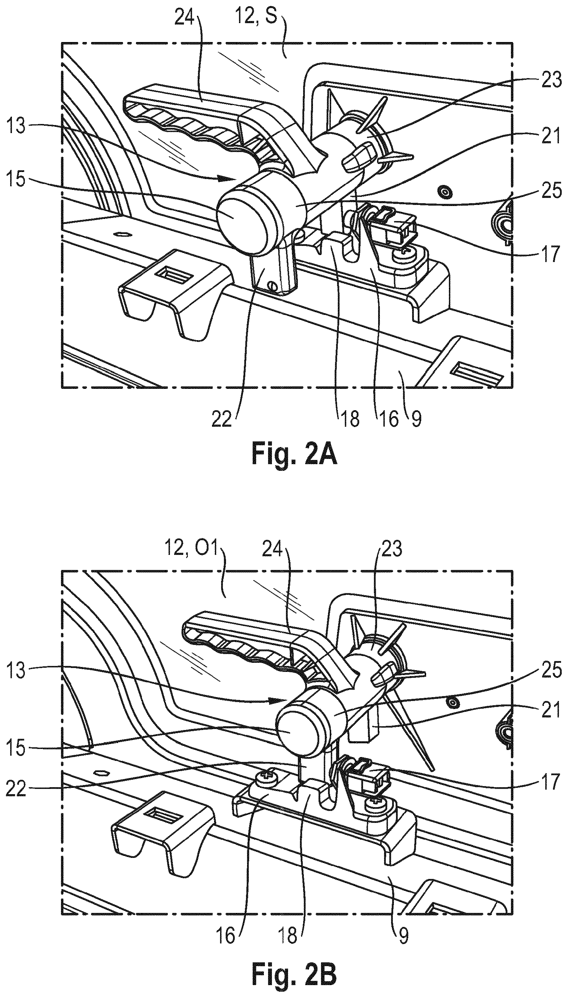

FIG. 1 zeigt eine schematische und exemplarische Darstellung einer erfindungsgemäßen landwirtschaftlichen Arbeitsmaschine 1 in Gestalt eines Traktors 2, dessen grundsätzlicher Aufbau bekannt ist. Die landwirtschaftliche Arbeitsmaschine 1 umfasst demnach eine Mehrzahl an - in den FIGs. nicht dargestellten - Arbeitsaggregaten, die dem Antrieb der landwirtschaftlichen Arbeitsmaschine 1 und/oder dem Antrieb eines - in den FIGs. nicht dargestellten - mit der landwirtschaftlichen Arbeitsmaschine 1 gekoppelten Anbaugerätes dienen. Zur Steuerung sowie allgemeinen Überwachung eines Betriebs der landwirtschaftlichen Arbeitsmaschine 1 umfasst selbige eine erfindungsgemäße Kabine 3, in der sich ein - in den FIGs. nicht dargestellter - Bediener während des Betriebs der landwirtschaftlichen Arbeitsmaschine 1 zur Steuerung derselben befindet. Ferner umfasst die Kabine 3 eine Rahmenstruktur 4, von der in FIG. 1 eine Dachstruktur 5, eine Bodenstruktur 6 sowie Tragsäulen 7, 8, sogenannte A- und B-Säulen der Kabine 3, dargestellt sind. Die Rahmenstruktur 4 kann weitere Strukturelemente, beispielsweise eine sich zwischen den zwei die A-Säulen bildenden Tragsäulen 7 oder eine sich zwischen den zwei die B-Säulen bildenden Tragsäulen 8 erstreckende Querstrebe 9, wie in den FIGs. 2A bis 2C dargestellt, umfassen. Zwischen den die A-Säulen bildenden Tragsäulen 7 erstreckt sich in Querrichtung der landwirtschaftlichen Arbeitsmaschine 1 eine Frontscheibe 10, die einen vorderen räumlichen Abschluss der Kabine 3 bildet. Neben der Frontscheibe 10 umfasst die Kabine 3 an ihren Seiten jeweils eine Seitenscheibe 11, welche Teil einer Zugangstür zur Kabine 3 sein kann. Die Seitenscheiben 11 erstrecken sich zwischen einer jeweiligen eine A-Säule bildenden Tragsäule 7 und einer jeweiligen eine B-Säule bildenden Tragsäule 8.

Weiterhin umfasst die Kabine 3 eine Heckscheibe 12, die sich zwischen den die B-Säulen bildenden Tragsäulen 8, der Dachstruktur 5 und der Querstrebe 9 erstreckt und die schwenkbar an der Rahmenstruktur 4, beispielsweise an der Dachstruktur 5 oder den die B-Säulen bildenden Tragsäulen 8, gelagert ist. Die Heckscheibe 12 kann aus einer Schließstellung S reversibel in eine erste Offenstellung O1 und eine zweite Offenstellung O2 verschwenkt werden, wie in FIG. 1 strichpunktiert schematisch angedeutet, und in jeder dieser Stellungen S, O1, O2 arretiert werden. Die Schließstellung S der Heckscheibe 12 ist dabei so definiert, dass die Heckscheibe 12 nicht verschwenkt ist, die Heckscheibe 12 also die durch die Rahmenstruktur 4, insbesondere durch die Dachstruktur 5, die die B-Säulen bildenden Tragsäulen 8 und die Querstrebe 9, gebildete heckseitige Öffnung in der Kabine 3 verschließt. Die erste Offenstellung O1 der Heckscheibe 12 ist so definiert, dass die Heckscheibe 12 nur leicht verschwenkt, also leicht geöffnet ist, sodass Kabel verschiedener Dimensionierung von außen in das Kabineninnere durch die gebildete Öffnung zwischen Heckscheibe 12 und Rahmenstruktur 4 geführt werden können. Die zweite Offenstellung O2 ist so definiert, dass die Heckscheibe 12 stärker verschenkt ist als in der ersten Offenstellung O1. Die Heckscheibe 12 befindet sich in der zweiten Offenstellung O2 vorzugsweise nicht oder nur noch vernachlässigbar im Sichtfeld des Bedieners, die Heckscheibe 12 ist in der zweiten Offenstellung O2 besonders bevorzugt im Wesentlichen parallel zur Dachstruktur 5 der Kabine 3 ausgerichtet bzw. verschwenkt. Zum Verschwenken und Arretieren der Heckscheibe 12 ist ein Handgriff 13 vorgesehen, der im Detail in den FIGs. 2A bis 2C dargestellt ist und auf den im Folgenden noch eingegangen wird.

Die Kabine 3 umfasst weiterhin verschiedene Scheibenwischer bzw. Wischeranlagen zur Reinigung der Scheiben 10, 11, 12 der Kabine 3, deren grundsätzlicher Aufbau aus einem motorisch antreibbaren bzw. verschwenkbaren Wischerarm und einem an diesem befestigten bzw. montierten Wischerblatt bekannt ist. Im Folgenden wird auf den in FIG. 1 schematisch dargestellten Scheibenwischer 14 der Heckscheibe 12 Bezug genommen, dessen für den Antrieb vorgesehener - in den FIGs. nicht dargestellter - Motor nahe oder an der Dachstruktur 5 der Kabine 3 innen- oder außenseitig montiert bzw. befestigt sein kann.

Wie eingangs beschrieben, kann die Positionierung des Scheibenwischers 14, insbesondere des Motors, in Kombination mit der Schwenkbarkeit der Heckscheibe 12 im Betrieb des Scheibenwischers 14 unter Umständen, insbesondere dann, wenn sich die Heckscheibe 12 in der zweiten Offenstellung O2 befindet, dazu führen, dass sich der Scheibenwischer 14 bzw. das Wischerblatt des Scheibenwischers 14 aus der vorgesehen Ausrichtung bewegt, insbesondere verdreht, wodurch Beschädigungen der Heckscheibe 12, der Rahmenstruktur 4 der Kabine 3 und/oder der mechanischen Komponenten des Scheibenwischers 14 verursacht werden können.

Um solche Betriebszustände des Scheibenwischers 14 zu verhindern, wird erfindungsgemäß eine Einrichtung als Bestandteil der Kabine 3 vorgeschlagen mittels welcher detektiert werden kann, ob sich die Heckscheibe 12 in der Schließstellung S, der ersten Offenstellung O1 oder der zweiten Offenstellung O2 befindet. Abhängig von der detektierten Stellung S, O1, O2 der Heckscheibe 12 ist der Betrieb des Scheibenwischers 14 entweder freigegeben oder gesperrt.

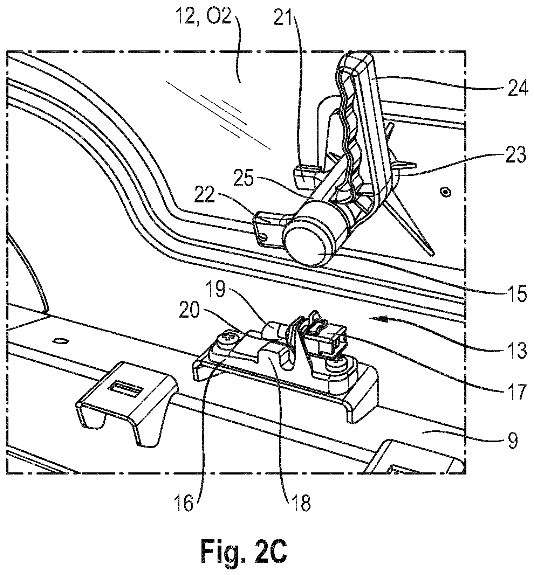

Bezugnehmend auf die FIGs. 2A bis 2C wird diese Einrichtung nachfolgend im Detail beschrieben, wobei die FIG. 2A die Heckscheibe 12 in der Schließstellung S, die FIG. 2B die Heckscheibe 12 in der ersten Offenstellung O1 und die FIG. 2C die Heckscheibe 12 in der zweiten Offenstellung O2 allesamt mit Blickrichtung aus dem Kabineninneren darstellen. Die FIGs. 2A bis 2C zeigen den Handgriff 13 der Kabine 3, der aus zwei Elementen, einem Betätigungselement 15 und einem Haltelement 16, ausgebildet wird. Das Betätigungselement 15 ist an der Heckscheibe 12 befestigt, beispielsweise über eine Schraubverbindung oder eine Klebeverbindung. Das Halteelement 16 ist an der Rahmenstruktur 4, insbesondere an der Querstrebe 9 der Rahmenstruktur 4, befestigt, beispielsweise ebenfalls über eine Schraubverbindung oder eine Klebeverbindung. Alternativ kann das Halteelement 16 auch integral mit der Rahmenstruktur 4, insbesondere der Querstrebe 9 der Rahmenstruktur 4, ausgebildet sein.

Wesentlich ist nun, dass der Handgriff 13 eine Sensoreinrichtung 17 umfasst, die in der Schließstellung S der Heckscheibe 12 und in der ersten Offenstellung O1 der Heckscheibe 12 mit dem Betätigungselement 15 des Handgriffs 13 zusammenwirkt, wie in den FIGs. 2A und 2B dargestellt. Wirkt die Sensoreinrichtung 17 mit dem Betätigungselement 15 des Handgriffs zusammen, so ist der Betrieb des Scheibenwischers 14 freigegeben. In der zweiten Offenstellung O2 der Heckscheibe 12 wirkt die Sensoreinrichtung 17 hingegen nicht mit dem Betätigungselement 15 des Handgriffs 13 zusammen, wie in FIG. 2C dargestellt. In diesem Fall, also dann, wenn die Sensoreinrichtung 17 nicht mit dem Betätigungselement 15 des Handgriffs 13 zusammenwirkt, ist der Betrieb des Scheibenwischers 14 gesperrt. Mit anderen Worten, der Betrieb des Scheibenwischers 14 ist somit nur in der Schließstellung S und der ersten Offenstellung O1 freigegeben. Mittels der Sensoreinrichtung 17 ist es somit möglich den Betrieb des Scheibenwischers 14 zu unterbinden, wenn die Heckscheibe 12 in eine Offenstellung mit erhöhtem Öffnungsgrad überführt wurde, in der die Gefahr besteht, dass es aufgrund einer durch den Öffnungsgrad der Heckscheibe 12 verursachten Änderung in der Ausrichtung des Scheibenwischers 14 zu Beschädigungen kommen kann. Das Zusammenwirken von Sensoreinrichtung 17 und Betätigungselement 15 des Handgriffs 13 ist hier weit zu verstehen. So ist es vorstellbar, dass das Betätigungselement 15 die Sensoreinrichtung 17 in der Schließstellung S und der ersten Offenstellung O1 der Heckscheibe 12 berührt, die Sensoreinrichtung 17 dabei als berührend arbeitende Sensoreinrichtung 17, beispielsweise als Schalter, wie in den FIGs. 2A bis 2C dargestellt, ausgeführt ist. Genauso gut ist es vorstellbar, dass sich das Betätigungselement 15 des Handgriffs 13 in der Schließstellung S und der ersten Offenstellung O1 der Heckscheibe 12 lediglich in einem Detektionsbereich der Sensoreinrichtung 17 befindet, die Sensoreinrichtung 17 ist dabei als berührungslos arbeitende Sensoreinrichtung 17, beispielsweise als kapazitiver, induktiver oder optischer Sensor, ausgestaltet ist.

Die Sensoreinrichtung 17 ist an dem Halteelement 16 des Handgriffs 13 angeordnet, befestigt bzw. das Halteelement 16 umfasst die Sensoreinrichtung 17. Das Haltelement 16 umfasst weiterhin eine durch zwei - insbesondere in FIG. 2C dargestellte - Vorsprünge 18, 19 gebildete Aufnahme 20, die zum Arretieren der Heckscheibe 12 dient. Die Sensoreinrichtung 17 ist vorzugsweise im Bereich der Aufnahme 20 an dem Halteelement 16 angeordnet bzw. befestigt, wobei der Detektionsbereich bzw. der Taster der Sensoreinrichtung 17 im Bereich der Aufnahme 20 liegt.

Das Betätigungselement 15 des Handgriffs 13 umfasst einen ersten Vorsprung 21 sowie einen zweiten Vorsprung 22, die der Arretierung der Heckscheibe 12 in der Schließstellung S und der ersten Offenstellung O1 dienen. Der erste Vorsprung 21 ist dazu vorgesehen, die Heckscheibe 12 in der Schließstellung S der Heckscheibe 12 zu arretieren. Hierzu ist der erste Vorsprung 21 in der Schließstellung S der Heckscheibe 12 in der Aufnahme 20 des Halteelements 16 aufgenommen. Der zweite Vorsprung 22 dient hingegen der Arretierung der Heckscheibe 12 in der ersten Offenstellung O1 der Heckscheibe 12. Hierzu ist der zweite Vorsprung 22 in der ersten Offenstellung O1 der Heckscheibe 12 in der Aufnahme 20 des Halteelements 16 aufgenommen. Bei dem ersten Vorsprung 21 handelt es sich vorzugsweise um einen sogenannten Verriegelungspin bzw. - stab, bei dem zweiten Vorsprung 22 hingegen um einen Lüftungs- bzw. Ventilationspin bzw. -stab. Der erste Vorsprung 21 und der zweite Vorsprung 22 sind voneinander beanstandet an dem Betätigungselement 15 des Handgriffs 13 angeordnet. Voneinander beabstandet ist hierbei unter Bezugnahme auf die FIGs. 2A bis 2C so zu verstehen, dass die Vorsprünge 21, 22 ausgehend von der Heckscheibe 12, an welcher das Betätigungselement 15 montiert bzw. befestigt ist, in orthogonaler Richtung voneinander beabstandet sind, also hintereinander angeordnet sind. Mit anderen Worten, der erste Vorsprung 21 ist näher an der Heckscheibe 12 positioniert bzw. angeordnet als der zweite Vorsprung 22.

Wie in FIG. 2A zu sehen, wirkt der erste Vorsprung 21 der Betätigungseinrichtung 15 des Handgriffs 13 demnach in der Schließstellung S der Heckscheibe 12 mit der Sensoreinrichtung 17 zusammen. Der zweite Vorsprung 22 der Betätigungseinrichtung 15 des Handgriffs 13 wirkt hingegen in der ersten Offenstellung O1 der Heckscheibe 12 mit der Sensoreinrichtung 17 zusammen. Für den Fall, der auch in den FIGs. 2A bis 2C dargestellt ist, dass die Sensoreinrichtung 17 als berührend arbeitende Sensoreinrichtung 17, insbesondere als Schalter, ausgebildet ist, kontaktiert demnach der erste Vorsprung 21 des Betätigungselements 15 den Taster der Sensoreinrichtung 17 in der Schließstellung S der Heckscheibe 12. In der ersten Offenstellung O1 der Heckscheibe 12 kontaktiert hingegen der zweite Vorsprung 22 des Betätigungselements 15 den Taster der Sensoreinrichtung 17. Für den Fall, dass die Sensoreinrichtung 17 hingegen als berührungslos arbeitende Sensoreinrichtung 17, insbesondere als kapazitiver, induktiver oder optischer Sensor, ausgebildet ist, liegt der erste Vorsprung 21 des Betätigungselements 15 in der Schließstellung S der Heckscheibe 12 im Detektionsbereich der Sensoreinrichtung 17. In der ersten Offenstellung O1 der Heckscheibe 12 liegt entsprechend der zweite Vorsprung 22 des Betätigungselements 15 im Detektionsbereich der Sensoreinrichtung 17. Unabhängig davon, ob die Sensoreinrichtung 17 als berührend arbeitende Sensoreinrichtung 17 oder aber als berührungslos arbeitende Sensoreinrichtung 17 ausgebildet ist, kontaktiert oder liegt das Betätigungselement 15, insbesondere der erste Vorsprung 21 oder der zweite Vorsprung 22 des Betätigungselements 15, in der zweiten Offenstellung O2 der Heckscheibe 12 die Sensoreinrichtung 17 nicht bzw. nicht im Detektionsbereich der Sensoreinrichtung 17.

Anhand der detektierten bzw. sensierten Stellung des Betätigungselements 15, insbesondere des ersten Vorsprungs 21 und des zweiten Vorsprungs 22, ist es somit möglich zu erfassen, dass die Heckscheibe 12 entweder in der Schließstellung S, in der ersten Offenstellung O1 oder in der zweiten Offenstellung O2 positioniert ist. In der Schließstellung S und der ersten Offenstellung O1 der Heckscheibe 12 ist es zulässig, dass der Scheibenwischer 14, welcher der Reinigung der Heckscheibe 12 dient, manuell oder automatisch aktiviert werden kann, falls sich Verunreinigungen auf der Heckscheibe 12 befinden, ohne dabei Gefahr zu laufen, dass der Scheibenwischer 14 aufgrund einer schwenkwinkelbedingten Fehlausrichtung Beschädigungen im Betrieb verursacht. In der zweiten Offenstellung O2 der Heckscheibe 12 ist es hingegen nicht zulässig, dass der Scheibenwischer 14 manuell oder automatisch aktiviert werden kann, falls sich Verunreinigungen auf der Heckscheibe 12 befinden, da hier die Gefahr besteht, dass der Scheibenwischer 14 aufgrund einer schwenkwinkelbedingten Fehlausrichtung Beschädigungen im Betrieb verursacht. Die erfindungsgemäße Sensoreinrichtung 17 erlaubt es somit auf besonders unkomplizierte Art und Weise die Stellung bzw. Position der Heckscheibe 12 relativ zur Rahmenstruktur 4 der Kabine 3 zu ermitteln und basierend hierauf den Betrieb des Scheibenwischers 14 zu steuern.

Das Betätigungselement 15 des Handgriffs 13 umfasst ein Lagerelement 23 und ein mit einem Griffteil 24 versehenes Griffelement 25. Das Lagerelement 23 ist an der Heckscheibe 12 befestigt bzw. montiert und das Griffelement 25 ist auf dem Lagerelement 23 drehbeweglich angeordnet bzw. gelagert. Der erste Vorsprung 21 und der zweite Vorsprung 22 sind an dem Griffelement 25 des Betätigungselements 15 des Handgriffs 13 ausgebildet. Das Griffteil 24 dient einem sich in der Kabine 3 befindenden Bediener der landwirtschaftlichen Arbeitsmaschine 1 dazu die Heckscheibe 12 zwischen den verschiedenen Stellungen S, O1, O2 zu verschwenken. Durch eine Betätigung des Griffteils 24, insbesondere eine Schwenkbewegung des Griffteils 24 um eine - in den FIGs. nicht dargestellte - durch das Lagerelement 23 verlaufende Rotationsachse, und eine hierdurch induzierte Rotation des Griffelements 25 um das Lagerelement 23 kann die Arretierung der Heckscheibe 12 in der Schließstellung S oder der ersten Offenstellung O 1 gelöst werden, in dem der entsprechende Vorsprung 21, 22 aus der Aufnahme 20 des Halteelements 16 des Handgriffs 13 bewegt wird. Das Arretieren der Heckscheibe 12 in der Schließstellung S oder der ersten Offenstellung O1 kann entsprechend durch Betätigung des Griffteils 24 und eine hierdurch ausgelöste Rotation des Griffelements 25 um das Lagerelement 23 erfolgen, wodurch der entsprechende Vorsprung 21, 22 in die Aufnahme 20 des Halteelements 16 bewegt wird. Die Sensoreinrichtung 17 detektiert entsprechend die Stellung bzw. Position des Betätigungselements 15, insbesondere des ersten und des zweiten Vorsprung 21, 22.

Das Griffelement 25 kann zum Zwecke der Bestimmung der Schließstellung S und der ersten Offenstellung O1 der Heckscheibe 12 anstelle oder zusätzlich zu den Vorsprüngen 21, 22 auch andere Merkmale umfassen, die es der Sensoreinrichtung 17, insbesondere dann, wenn diese als berührungslose arbeitende Sensoreinrichtung 17 ausgebildet ist, erlauben, die Stellungen S, O1 der Heckscheibe 12 zu ermitteln. So ist es beispielsweise vorstellbar, dass das Griffelement 25 zwei unterschiedliche Oberflächenstrukturen, beispielsweise zwei unterschiedliche Rauigkeiten, aufweist. Gleichermaßen ist es vorstellbar, dass das Griffelement 25 aus zwei unterschiedlichen Materialien, beispielsweise Stahl und Aluminium, Aluminium und Kunststoff oder dergleichen, ausgebildet ist. Auch ist es vorstellbar, dass das Griffelement 25 zwei voneinander verschiedene Farbbeschichtungen umfasst.

Die Sensoreinrichtung 17 ist zur Auswertung der Sensorsignale mit einer - in den FIGs. nicht dargestellten - Steuereinrichtung zur Übertragung von Daten verbunden. Die Steuereinrichtung kann beispielsweise Teil der Kabine 3 sein. Gleichermaßen aber auch Teil der landwirtschaftlichen Arbeitsmaschine 1 sein oder aber als maschinenferne Steuereinrichtung ausgebildet sein. Die Steuereinrichtung verarbeitet die Sensorsignale der Sensoreinrichtung 17 und bestimmt aus den Sensorsignalen, ob sich die Heckscheibe 12 in der Schließstellung S oder der ersten Offenstellung O1 befindet oder aber ob die Heckscheibe 12 die zweite Offenstellung O2 eingenommen hat. Ermittelt die Steuereinrichtung 17, dass sich die Heckscheibe 12 in der Schließstellung S oder der ersten Offenstellung O1 befindet, da beispielsweise von der Sensoreinrichtung 17 ein Sensorsignal generiert wird, das Betätigungselement 15, insbesondere der erste Vorsprung 21 oder zweite Vorsprung 22, somit mit der Sensoreinrichtung 17 zusammenwirkt, gibt die Steuereinrichtung den Betrieb des Scheibenwischers 14 frei. Ermittelt die Steuereinrichtung 17 hingegen, dass sich die Heckscheibe 12 in der zweiten Offenstellung O2 befindet, da beispielsweise von der Sendeeinrichtung 17 kein Sensorsignal generiert wird, das Betätigungselement 15, insbesondere erste Vorsprung 21 oder der zweite Vorsprung 22, somit nicht mit der Sensoreinrichtung 17 zusammenwirkt, sperrt die Steuereinrichtung den Betrieb des Scheibenwischers 14. Hierdurch wird sichergestellt, dass der Scheibenwischer 14 nur bei geschlossener oder gering verschwenkter Heckscheibe 12 aktiviert werden kann. Bei zu weit verschwenkter Heckscheibe 12 kann der Scheibenwischer 14 hingegen nicht aktiviert werden, um etwaige Beschädigungen zu vermeiden.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

- 1: Landwirtschaftliche Arbeitsmaschine
- 2: Traktor
- 3: Kabine
- 4: Rahmenstruktur
- 5: Dachstruktur
- 6: Bodenstruktur
- 7: Tragsäule
- 8: Tragsäule
- 9: Querstrebe
- 10: Frontscheibe
- 11: Seitenscheibe
- 12: Heckscheibe
- 13: Handgriff
- 14: Scheibenwischer
- 15: Betätigungselement
- 16: Halteelement
- 17: Sensoreinrichtung
- 18: Vorsprung am Halteelement
- 19: Vorsprung am Halteelement
- 20: Aufnahme am Halteelement
- 21: erster Vorsprung am Betätigungselement
- 22: zweiter Vorsprung am Betätigungselement
- 23: Lagerelement
- 24: Griffteil
- 25: Griffelement
- S: Schließstellung der Heckscheibe
- O1: erste Offenstellung der Heckscheibe
- O2: zweite Offenstellung der Heckscheibe

## Patentansprüche

1. Kabine (3) für eine landwirtschaftliche Arbeitsmaschine (1), insbesondere einen Traktor (2), umfassend eine Rahmenstruktur (4), an der eine Heckscheibe (12) schwenkbar gelagert ist, wobei die Heckscheibe (12) zwischen einer Schließstellung (S), einer ersten Offenstellung (O1) und einer zweiten Offenstellung (O2) verschwenkbar und in diesen jeweils arretierbar ist, wobei zur Betätigung und Arretierung der Heckscheibe (12) ein Handgriff (13) vorgesehen ist, der ein an der Heckscheibe (12) befestigtes Betätigungselement (15) und ein an der Rahmenstruktur (4) befestigtes Halteelement (16) umfasst, wobei die Kabine (3) einen Scheibenwischer (14) zur Reinigung der Heckscheibe (12) umfasst, **dadurch gekennzeichnet, dass** der Handgriff (13) eine Sensoreinrichtung (17) umfasst, wobei die Sensoreinrichtung (17) in der Schließstellung (S) und der ersten Offenstellung (O1) der Heckscheibe (12) mit dem Betätigungselement (15) zusammenwirkt und ein Betrieb des Scheibenwischers (14) nur dann freigegeben ist.

2. Kabine (3) nach Anspruch 1, **dadurch gekennzeichnet, dass** das Betätigungselement (15) einen ersten Vorsprung (21) und einen zweiten Vorsprung (22) umfasst, die voneinander beabstandet angeordnet sind und zum Arretieren der Heckscheibe (12) in der Schließstellung (S) und der ersten Offenstellung (O1) dienen.

3. Kabine (3) nach Anspruch 2, **dadurch gekennzeichnet, dass** das Halteelement (16) eine Aufnahme (20) umfasst, in welcher der erste Vorsprung (21) zum Arretieren der Heckscheibe (12) in der Schließstellung (S) der Heckscheibe (12) und der zweite Vorsprung (22) zum Arretieren der Heckscheibe (12) in der ersten Offenstellung (O1) der Heckscheibe (12) aufgenommen ist.

4. Kabine (3) nach einem der Ansprüche 1 bis 3, **dadurch gekennzeichnet, dass** das Halteelement (16) des Handgriffs (13) die Sensoreinrichtung (17) umfasst, wobei die Sensoreinrichtung (17), vorzugsweise, im Bereich der Aufnahme (20) des Haltelements (16) angeordnet ist.

5. Kabine (3) nach einem der Ansprüche 2 bis 4, **dadurch gekennzeichnet, dass** der erste Vorsprung (21) der Betätigungseinrichtung (15) in der Schließstellung (S) der Heckscheibe (12) mit der Sensoreinrichtung (17) zusammenwirkt und der zweite Vorsprung (22) der Betätigungseinrichtung (15) in der ersten Offenstellung (O1) der Heckscheibe (12) mit der Sensoreinrichtung (17) zusammenwirkt.

6. Kabine (3) nach einem der Ansprüche 1 bis 5, **dadurch gekennzeichnet, dass** das Betätigungselement (15) ein Lagerelement (23) und ein mit einem Griffteil (24) versehenes Griffelement (25) umfasst, wobei das Lagerelement (23) an der Heckscheibe (12) befestigt und das Griffelement (25) auf dem Lagerelement (23) drehbeweglich angeordnet ist.

7. Kabine (3) nach Anspruch 6 in Kombination mit einem der Ansprüche 2 bis 5, **dadurch gekennzeichnet, dass** der erste Vorsprung (21) und der zweite Vorsprung (22) an dem Griffelement (25) des Betätigungselements (15) ausgebildet sind.

8. Kabine (3) nach Anspruch 6 oder 7, **dadurch gekennzeichnet, dass** das Griffelement (25) zwei unterschiedliche Oberflächenstrukturen aufweist, das Griffelement (25) aus zwei unterschiedlichen Materialien ausgebildet ist und/oder das Griffelement (25) zwei voneinander verschiedene Farbbeschichtungen umfasst.

9. Kabine (3) nach einem der Ansprüche 1 bis 8, **dadurch gekennzeichnet, dass** die Sensoreinrichtung (17) eine berührend arbeitende Sensoreinrichtung (17), insbesondere ein Schalter, ist, die in der Schließstellung (S) und der ersten Offenstellung (O1) der Heckscheibe (12) das Betätigungselement (15) des Handgriffs (13), insbesondere den ersten Vorsprung (21) oder den zweiten Vorsprung (22), kontaktiert; oder
die Sensoreinrichtung (17) eine berührungslos arbeitende Sensoreinrichtung (17), insbesondere ein kapazitiver, induktiver oder optischer Sensor, ist, wobei sich das Betätigungselement (15), insbesondere der erste Vorsprung (21) oder der zweite Vorsprung (22), in der Schließstellung (S) und der ersten Offenstellung (O1) der Heckscheibe (12) im Detektionsbereich der Sensoreinrichtung (17) befindet.

10. Kabine (3) nach einem der Ansprüche 1 bis 9, **dadurch gekennzeichnet, dass** die Sensoreinrichtung (17) mit einer Steuereinrichtung zur Übertragung von Daten verbunden ist, wobei der Betrieb des Scheibenwischers (14) bei einem Zusammenwirken von Sensoreinrichtung (17) und Betätigungselement (15) mittels der Steuereinrichtung freigegeben ist.

11. Landwirtschaftliche Arbeitsmaschine (1), insbesondere Traktor (2), mit einer Kabine (3), **dadurch gekennzeichnet, dass** die Kabine (3) nach einem der Ansprüche 1 bis 10 ausgebildet ist.

## Claims

1. Cabin (3) for an agricultural machine (1), in particular a tractor (2), comprising a frame structure (4) on which a rear window (12) is pivotably mounted, wherein the rear window (12) is able to be pivoted between a closed position (S), a first open position (O1) and a second open position (O2) and is able to be locked in each of these positions, wherein a handle (13) is provided for actuating and locking the rear window (12), said handle comprising an actuating element (15) fastened to the rear window (12) and a holding element (16) fastened to the frame structure (4), wherein the cabin (3) comprises a windscreen wiper (14) for cleaning the rear window (12), **characterized in that** the handle (13) comprises a sensor device (17), wherein the sensor device (17) interacts with the actuating element (15) in the closed position (S) and the first open position (O1) of the rear window (12), and only then is operation of the windscreen wiper (14) enabled.

2. Cabin (3) according to Claim 1, **characterized in that** the actuating element (15) comprises a first projection (21) and a second projection (22) which are arranged at a distance from one another and are used to lock the rear window (12) in the closed position (S) and the first open position (O1).

3. Cabin (3) according to Claim 2, **characterized in that** the holding element (16) comprises a receptacle (20) in which the first projection (21) for locking the rear window (12) in the closed position (S) of the rear window (12) and the second projection (22) for locking the rear window (12) in the first open position (O1) of the rear window (12) are received.

4. Cabin (3) according to one of Claims 1 to 3, **characterized in that** the holding element (16) of the handle (13) comprises the sensor device (17), wherein the sensor device (17) is preferably arranged in the region of the receptacle (20) of the holding element (16).

5. Cabin (3) according to one of Claims 2 to 4, **characterized in that** the first projection (21) of the actuating device (15) interacts with the sensor device (17) in the closed position (S) of the rear window (12), and the second projection (22) of the actuating device (15) interacts with the sensor device (17) in the first open position (O1) of the rear window (12).

6. Cabin (3) according to one of Claims 1 to 5, **characterized in that** the actuating element (15) comprises a bearing element (23) and a grip element (25) which is provided with a grip part (24), wherein the bearing element (23) is fastened to the rear window (12) and the grip element (25) is rotatably arranged on the bearing element (23).

7. Cabin (3) according to Claim 6 in combination with one of Claims 2 to 5, **characterized in that** the first projection (21) and the second projection (22) are formed on the grip element (25) of the actuating element (15).

8. Cabin (3) according to Claim 6 or 7, **characterized in that** the grip element (25) has two different surface structures, the grip element (25) is formed from two different materials and/or the grip element (25) comprises two colour coatings that are different from one another.

9. Cabin (3) according to one of Claims 1 to 8, **characterized in that** the sensor device (17) is a touch-operated sensor device (17), in particular a switch, which in the closed position (S) and the first open position (O1) of the rear window (12) makes contact with the actuating element (15) of the handle (13), in particular the first projection (21) or the second projection (22); or the sensor device (17) is a contactlessly operated sensor device (17), in particular a capacitive, inductive or optical sensor, wherein the actuating element (15), in particular the first projection (21) or the second projection (22), is situated in the detection region of the sensor device (17) in the closed position (S) and the first open position (O1) of the rear window (12).

10. Cabin (3) according to one of Claims 1 to 9, **characterized in that** the sensor device (17) is connected to a control device for transmitting data, wherein the operation of the windscreen wiper (14) is enabled by means of the control device when the sensor device (17) and actuating element (15) interact.

11. Agricultural machine (1), in particular a tractor (2), having a cabin (3), **characterized in that** the cabin (3) is designed according to one of Claims 1 to 10.

## Revendications

1. Cabine (3) destinée à une machine de travail agricole (1), en particulier un tracteur (2), comprenant une structure de cadre (4) sur laquelle une vitre arrière (12) est montée avec possibilité de pivotement, la vitre arrière (12) pouvant être pivotée entre une position fermée (S), une première position ouverte (O1) et une deuxième position ouverte (O2), et pouvant être verrouillée respectivement dans ces positions, sachant que pour l'actionnement et le verrouillage de la vitre arrière (12), il est prévu une poignée (13) qui comporte un élément d'actionnement (15) fixé à la vitre arrière (12) et un élément de maintien (16) fixé à la structure de cadre (4), la cabine (3) comprenant un essuie-glace (14) pour le nettoyage de la vitre arrière (12), **caractérisée en ce que** la poignée (13) comporte un dispositif à capteur (17), le dispositif à capteur (17) coopérant avec l'élément d'actionnement (15) dans la position fermée (S) et dans la première position ouverte (O1) de la vitre arrière (12), et un fonctionnement de l'essuie-glace (14) étant autorisé uniquement dans ce cas.

2. Cabine (3) selon la revendication 1, **caractérisée en ce que** l'élément d'actionnement (15) comporte une première saillie (21) et une deuxième saillie (22) qui sont disposées à distance l'une de l'autre et servent au verrouillage de la vitre arrière (12) dans la position fermée (S) et dans la première position ouverte (O1).

3. Cabine (3) selon la revendication 2, **caractérisée en ce que** l'élément de maintien (16) comporte un logement (20) dans lequel la première saillie (21) est logée pour le verrouillage de la vitre arrière (12) dans la position fermée (S), et dans lequel la deuxième saillie (22) est logée pour le verrouillage de la vitre arrière (12) dans la première position ouverte (O1) de la vitre arrière (12).

4. Cabine (3) selon une des revendications 1 à 3, **caractérisée en ce que** l'élément de maintien (16) de la poignée (13) comporte le dispositif à capteur (17), le dispositif à capteur (17) étant installé de préférence dans la région du logement (20) de l'élément de maintien (16).

5. Cabine (3) selon une des revendications 2 à 4, **caractérisée en ce que** la première saillie (21) du dispositif d'actionnement (15) coopère avec le dispositif à capteur (17) dans la position fermée (S) de la vitre arrière (12), et la deuxième saillie (22) du dispositif d'actionnement (15) coopère avec le dispositif à capteur (17) dans la première position ouverte (01) de la vitre arrière (12).

6. Cabine (3) selon une des revendications 1 à 5, **caractérisée en ce que** l'élément d'actionnement (15) comporte un élément de support (23) et un élément de poignée (25) pourvu d'une partie formant poignée (24), l'élément de support (23) étant fixé à la vitre arrière (12), et l'élément de poignée (25) étant disposé avec possibilité de rotation sur l'élément de support (23).

7. Cabine (3) selon la revendication 6 en combinaison avec une des revendications 2 à 5, **caractérisée en ce que** la première saillie (21) et la deuxième saillie (22) sont réalisées sur l'élément de poignée (25) de l'élément d'actionnement (15).

8. Cabine (3) selon la revendication 6 ou 7, **caractérisée en ce que** l'élément de poignée (25) présente deux structures de surface différentes, que l'élément de poignée (25) est réalisé à partir de deux matériaux différents et/ou que l'élément de poignée (25) comporte deux revêtements de couleur différents l'un de l'autre.

9. Cabine (3) selon une des revendications 1 à 8, **caractérisée en ce que** le dispositif à capteur (17) est un dispositif à capteur (17) fonctionnant par contact, notamment un interrupteur qui, dans la position fermée (S) et dans la première position ouverte (O1) de la vitre arrière (12), établit un contact avec l'élément d'actionnement (15) de la poignée (13), en particulier avec la première saillie (21) ou la deuxième saillie (22) ; ou que le dispositif à capteur (17) est un dispositif à capteur (17) fonctionnant sans contact, notamment un capteur capacitif, inductif ou optique, l'élément d'actionnement (15), en particulier la première saillie (21) ou la deuxième saillie (22), se trouvant dans la zone de détection du dispositif à capteur (17) lorsque la vitre arrière (12) est dans la position fermée (S) et dans la première position ouverte (O1).

10. Cabine (3) selon une des revendications 1 à 9, **caractérisée en ce que** le dispositif à capteur (17) est relié à un dispositif de commande en vue de la transmission de données, le fonctionnement de l'essuie-glace (14) étant autorisé au moyen du dispositif de commande en cas de coopération du dispositif à capteur (17) et de l'élément d'actionnement (15).

11. Machine de travail agricole (1), en particulier un tracteur (2), comprenant une cabine (3), **caractérisée en ce que** la cabine est réalisée selon une des revendications 1 à 10.
